# FASCICULE DE BREVET EUROPEEN

(11) **EP 1 380 149 B1**
(45) Date de publication et mention de la délivrance du brevet: **18.10.2006**
(21) Numéro de dépôt: 02759809.3
(22) Date de dépôt: 02.04.2002
(51) Int. Cl.: H04L 29/06

(54) **DISPOSITIF DE GENERATION D'UN FICHIER MULTIMEDIA A DESTINATION D'UN TERMINAL DE TELECOMMUNICATIONS ET FICHIER MULTIMEDIA ASSOCIE**
VORRICHTUNG ZUR GENERIERUNG EINER MULTIMEDIADATEI FÜR EIN TELEKOMMUNIKATIONSENDGERÄT UND MULTIMEDIADATEI DAFÜR
DEVICE FOR GENERATING A MULTIMEDIA FILE ADDRESSED TO A TELECOMMUNICATIONS TERMINAL AND RELATED MULTIMEDIA FILE

(30) Priorité: 05.04.2001 FR 0104663
(43) Date de publication de la demande: 14.01.2004
(73) Titulaire: ALCATEL, 75008 Paris (FR)
(72) Inventeur: COMPS, Christophe, F-31270 Cugnaux (FR); BEAUX, Philippe, F-92270 Bois Colombes (FR)
(74) Mandataire: Sciaux, Edmond
(86) Numéro de dépôt international: PCT/FR2002/001141
(87) Numéro de publication internationale: WO 2002/082770

(56) Documents cités:
- EP-A- 1 075 100
- US-A- 5 623 690
- ROUSSEAU F ET AL: "Synchronized multimedia for the WWW" COMPUTER NETWORKS AND ISDN SYSTEMS, NORTH HOLLAND PUBLISHING. AMSTERDAM, NL, vol. 30, no. 1-7, 1 avril 1998 (1998-04-01), pages 417-429, XP004121405 ISSN: 0169-7552

## Description

La présente invention se rapporte au domaine des télécommunications et est relative plus particulièrement à un dispositif de génération d'un fichier multimédia à destination d'un terminal de télécommunications à partir de groupes de données correspondant respectivement à un type de contenu du fichier multimédia.

L'invention est également relative à un fichier myultimedia destiné à être transmis à un terminal de télécommunications, ledit fichier comprenant une pluralité de paquets de données.

Notamment, ce qui est communément appelé l' "Internet mobile" offre une perspective d'application privilégiée pour les méthodes et le dispositif selon l'invention.

L'invention se situe plus particulièrement dans le domaine des services de télécommunication de données multimédia telles que des données vidéo, audio, graphiques, textuelles, hypertexte, et autres données.

Jusqu'à présent, la diffusion d'informations sur un réseau de télécommunication obéissait à des techniques bien particulières. Notamment la technique de « Pull », où un fournisseur de contenu met à disposition dans une base de données les informations qu'il veut transmettre. Les utilisateurs viennent y accéder après avoir eu connaissance de l'adresse de la base. Cette adresse peut faire l'objet d'une campagne de publicité par des moyens traditionnels tels que l'affichage, la télévision, la radio ou d'autres bases appartenant à d'autres fournisseurs de contenus. Cette technique est essentiellement utilisée via le réseau Internet. Ces techniques de pull permettent donc aux utilisateurs d'accéder spécifiquement aux informations qu'ils souhaitent, et ainsi d'obtenir une bonne qualité d'accès à l'information. En effet, par nature l'information est ciblée puisqu'elle résulte d'une sélection opérée par l'utilisateur.

Cependant, les techniques de Pull ne sont pas adaptées en diffusion. Ces techniques ne peuvent être mises en oeuvre qu'à la condition que l'utilisateur a été préalablement informé de l'existence de l'information mise à disposition sur le réseau. Ainsi, la population touchée par la diffusion est faible, même si en proportion par rapport à cette population touchée, le pourcentage de population intéressée par la transmission est important.

La diffusion d'informations peut encore être effectuée selon une autre technique appelée « Push ». Cette technique consiste pour un fournisseur de contenus à diffuser largement les informations qu'il souhaite transmettre. Les utilisateurs ont alors accès aux informations diffusées au travers de récepteurs appropriés de manière gratuite ou payante. La radio et la télévision sont des exemples tout à fait significatifs d'applications de ces techniques de diffusion d'informations dites push.

On en trouve une autre application dans les messages multimédia dits selon le système connu MMS ("Multimédia Messaging System" en langue anglaise). Le système MMS permet d'envoyer des messages à fort contenu multimedia. Il peut contenir non seulement des photos, des images et des graphiques mais aussi des séquences vidéos et des enregistrements de conversations par exemple, annexés comme "pièces jointes" à des messages brefs. Il est également prévu que ces messages puissent être envoyés de téléphone mobile à téléphone mobile mais aussi d'un téléphone mobile à une adresse de courrier électronique "e-mail" et vice-versa.

Il existe actuellement différents standards utilisant des fichiers multimédia. On notera notamment à cet égard les fichiers de présentation selon les protocoles HTML (« HyperText Marking Language » en anglais), WML (« Wireless Markup Language », en anglais), cHTML (« compact HTML » en anglais), ou SMIL (« Synchronized Multimedia Integration Language » en anglais).

Lorsqu'un tel fichier multimedia est téléchargé à partir d'un serveur vers un terminal mobile via le réseau de télécommunications mobiles, les différents contenus (images, textes, sons, animations, ...) attachés au fichier (ces contenus pouvant être inclus dans le fichier lui-même ou spécifiés par des liens hypertexte) sont souvent transmis au terminal mobile via la technique connue sous le nom du "streaming" ("défilement au fil de l'eau"). Le problème apparaît alors de la synchronisation entre ces différents contenus pour leur représentation cohérente à l'interface utilisateur voir, par exemple, le document ROUSSEAU F ET AL: "Synchronized multimedia for the WWW" COMPUTER NETWORKS AND ISDN SYSTEMS, NORTH HOLLAND PUBLISHING. AMSTERDAM, NL, vol. 30, no. 1-7, 1 avril 1998 (1998-04-01), pages 417-429, ISSN: 0169-7552. Ce problème est particulièrement présent lorsque les contenus sont transmis par la technique du "streaming" car le terminal n'a pas suffisamment d'espace mémoire pour télécharger l'intégralité des contenus multimédia avant de les exécuter. En effet, lorsque différentes données multimédia sont simultanément véhiculées en paquets (via des blocks des protocoles internet IP, ou TCP ou UDP et/ou RTP), il est difficile de planifier la synchronisation de ces différentes données provenant de différents média (on comprendra par média un type de données multimédia, par exemple des données sonores, des données graphiques, etc). Certains média peuvent nécessiter plus de bande passante et seront par conséquent disponibles localement sur le terminal plus tard que d'autres, alors qu'ils doivent être synchronisés rapidement avec ces autres média déjà arrivés et mémorisés par le terminal en attente pour exécution et interprétation à l'interface utilisateur.

Une solution pour résoudre le problème de synchronisation des média véhiculés par le réseau est apportée par le protocole SMIL. Cependant, celui-ci définit uniquement le point de départ de tous les média et ne vérifie pas si les blocs de contenus de média sont tous disponibles sur le terminal lorsqu'ils doivent être exécutés en synchronisation. Ceci a pour conséquence que si un paquet de données est perdu lors de sa transmission sur le réseau ou s'il arrive en décalage par rapport aux autres paquets avec lesquels il doit être synchronisé, alors les différents paquets correspondant à différents média ne sont plus synchronisés.

La présente invention a pour but de remédier au problème cité ci-dessus.

A cet effet, l'invention a pour objet un dispositif de génération d'un fichier multimédia à destination d'un terminal de télécommunications à partir de groupes de données correspondant respectivement à un type de contenu du fichier multimédia, caractérisé en ce que le dispositif comprend :
- des moyens de décomposition de chacun desdits groupes de données selon respectivement une pluralité de sous-groupes de données en fonction de points de synchronisation associés respectifs de début et de fin déterminés, des sous-groupes associés à des points de synchronisation respectifs de début et de fin d'exécution temporelle identiques, ces sous-groupes étant destinés à être exécutés simultanément sur des moyens d'interfaçage homme-machine du terminal,
- des moyens d'assemblage du fichier multimédia sous forme d'une pluralité de paquets comprenant une pluralité de sous-groupes de données associés à des points de synchronisation respectifs de début et de fin d'exécution temporelle identiques.

De cette sorte, l'invention permet de synchroniser tous les sous-groupes de données (types de contenus du fichier multimédia) qui sont reçus au niveau du terminal, indépendamment d'une différence de longueur de certains des groupes de données par rapport à d'autres.

De plus, aucune contrainte quant au type de contenu n'étant spécifié, l'invention permet la génération d'un fichier multimédia, quel que soit le média (types de contenu : image, graphique, sons...).

En outre, si un fichier ou un paquet de groupes de données est perdu durant la transmission sur le réseau ou bien arrive en décalage par rapport à d'autres paquets, ceci n'entraîne pas un dérèglement de la synchronisation, et il y a poursuite sur le terminal de la prise en compte des exécutions ultérieurs. Seule se produit une discontinuité d'exécution des différents média synchronisés due à la perte du paquet mais cette discontinuité correspond à une même interruption temporelle globale de présentation de tous les média synchronisés pour l'utilisateur du terminal. Il y a donc, suite à cette interruption, poursuite de la présentation multimédia de façon cohérente et synchronisée de tous les média synchronisés.

Selon un mode de réalisation, le dispositif selon l'invention comprend des moyens de description destinés à décrire les points de synchronisation dans le fichier multimédia.

Selon un mode de réalisation de l'invention, lesdits groupes de données comprennent des données textuelles, des images animées ou non, des sons compressés ou non.

Un mode de réalisation de l'invention comporte un serveur relais apte à recevoir des groupes de données correspondant respectivement à un type de contenu multimédia, destiné à émettre un fichier multimédia regroupant lesdits groupes de données, et caractérisé en ce qu'il comporte un dispositif de génération de fichier multimédia selon l'invention.

L'invention a également pour objet un fichier multimédia destiné à être transmis à un terminal de télécommunications, ledit fichier comprenant une pluralité de paquets de données, caractérisé en ce que
- chacun desdits paquets de données correspond à la concaténation de sous-groupes de données respectivement relatifs à un type de contenu de fichier multimedia et associés à des points de synchronisation respectifs de début et de fin d'exécution sur des moyens d'interfaçage homme-machine du terminal identiques.

Selon un mode de réalisation, le fichier selon l'invention comprend des moyens de description destinés à décrire les points de synchronisation associés au fichier multimédia.

Selon un mode de réalisation, le terminal de télécommunications auquel ledit fichier est destiné à être transmis est un terminal mobile du type comprenant un radiotéléphone ou/et un assistant numérique personnel doté de moyens de télécommunications sans fil, ou un terminal fixe du type d'un ordinateur personnel relié au réseau internet.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : un système de transmission de données multimédia vers un terminal utilisateur,
- Figure 2 : une structure d'un fichier multimédia selon un mode de réalisation de l'invention,
- Figure 3 : des groupes de données multimedia décomposés selon des points de synchronisation selon l'invention ,
- Figure 4 : un dispositif de génération de fichier multimedia selon un mode de réalisation de l'invention.

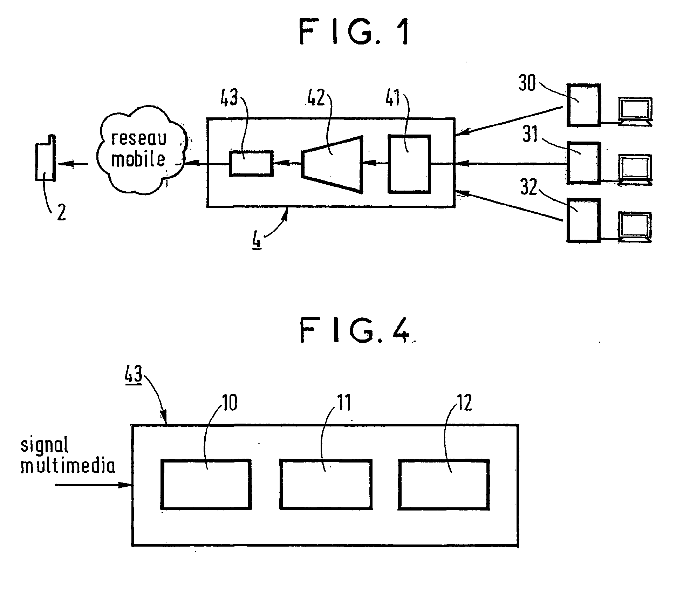

La figure 1 représente un système de transmission de données multimédia vers un terminal 2 client. Des serveurs 3 de données de contenus différents, dits serveurs média, sont illustrés à l'un des bouts de la chaîne du système 1. Ces serveurs de contenus peuvent contenir tout type de contenu. Par exemple, le serveur 30 est un serveur de données textuelles, le serveur 31 est un serveur d'images et le serveur 32 est un serveur d'images animées. Ces trois serveurs vont émettre des données qui leur sont propres vers un serveur 4 relais MMS, sur requête de téléchargement par le serveur 4. Les différentes données sont alors converties selon un format prédéterminé. A titre d'exemple, le dispositif 41 de conversion en entrée du serveur 4 est un dispositif selon le standard SMIL, détaillé dans l'introduction de la présente demande. Le standard SMIL est un format texte qui est supporté par un certain nombres d'industriels d'applications internet (navigateur internet, lecteurs de contenus, ...) . Une fois les données média converties par le dispositif 41, celles-ci sont regroupées et compressées dans un dispositif 42 de regroupage et de compression linéaire de données multimédia, connu en soi. Les données ainsi traitées sont alors délivrées à un dispositif 43 de génération de fichiers multimédia selon l'invention.

Dans le présent mode de réalisation, le dispositif 43 est un codeur MSE. Ce codeur, comme expliqué dans la suite, est en charge de la génération de paquets de données multimédia construits de manière entièrement synchronisée, qui permettent une présentation synchronisée des différents média à l'utilisateur une fois les paquets émis par le codeur 43 et reçu par le terminal 2. La synchronisation des différents média sur le terminal se traduit par une parfaite cohérence entre le texte et les images affichés sur l'écran, le son diffusé par le haut-parleur du terminal, ...

On remarquera que le bloc 41 a été illustré en pointillés car il n'est pas indispensable dans la chaîne de transmission du système 1. En effet, il peut être envisagé que la transmission des données des serveurs 30, 31, 32 vers le dispositif de regroupage 42 se fasse sans nécessairement avoir besoin de formater les différentes données selon un premier format prédéterminé.

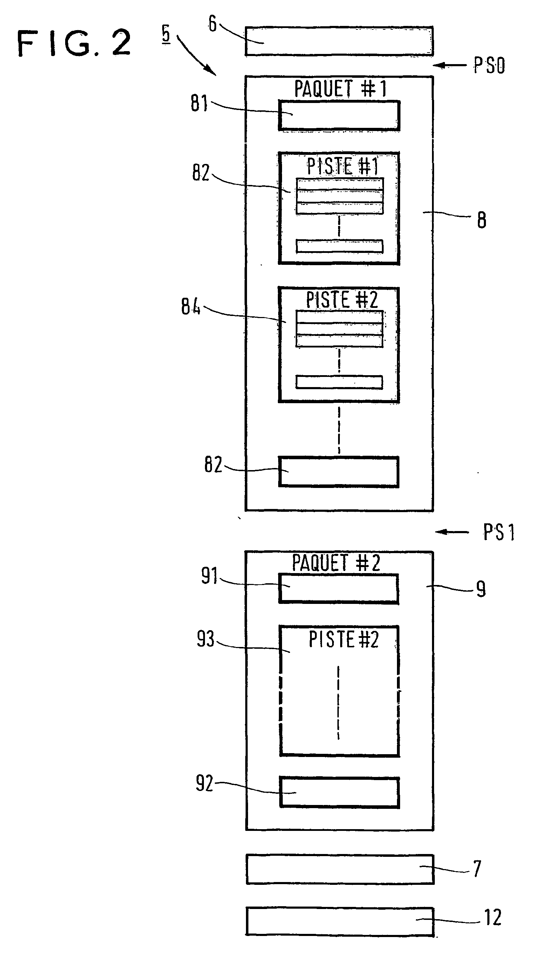

La figure 2 représente un exemple de structure d'un fichier 5 multimédia construit par le codeur 43. Ce fichier 5 comporte en premier lieu une en-tête 6 et une commande système 7 de fin de fichier permettant de marquer les délimitations du fichier 5. Le corps du fichier 5 comprend plusieurs paquets 8, 9... également référencés paquet #1 et paquet #2.

Chaque paquet 8,9, .. comporte la même syntaxe de délimitation de paquet : une commande système de début de paquet 81, 91 et une commande système de fin de paquet 82, 92. Entre ces deux commandes, chaque paquet comporte une pluralité de sous-groupes de données. Pour des questions de simplicité, il n'est illustré sur la figure 2 que deux sous-groupes de données 83, 84 pour le paquet #1 et deux sous-groupes de données 93, 94 pour le paquet #2, en sachant que chaque paquet peut en comporter bien plus selon la décomposition qui est faite dans les média, comme expliqué par la suite. Ces sous-groupes de données, référencées piste #1, piste #2, ... comprennent respectivement des données relatives à un même média. Par exemple, la piste #1 comprend des commandes et/ou des données d'affichage de texte, la piste #2 comprend des commandes et/ou des données d'affichage d'images et une piste #3, non représentée sur la figure 2, comprend des commandes et/ou des données, compressées ou non, de sons.

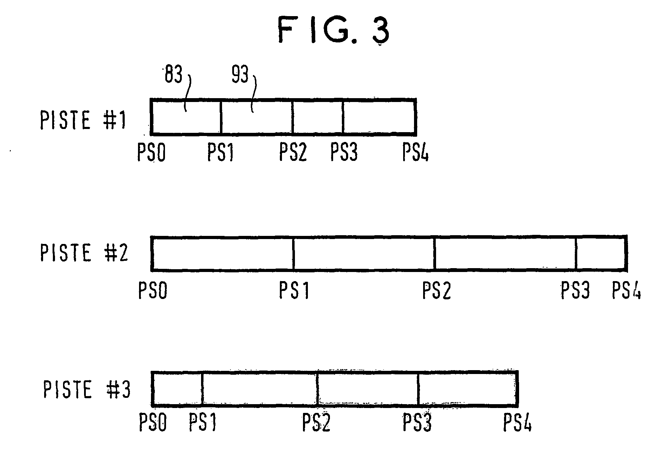

Chaque sous-groupe de données est une partie décomposée d'un groupe de données correspondant tel qu'illustré sur la figure 3. Ainsi, comme illustré sur la figure 3, le sous-groupe 83 du premier paquet #1 correspond à l'ensemble des données emmagasinné dans le média de la piste #1 et délimité par des points de synchronisation de début PS0 et de fin PS1. De même, le sous-groupe 84 du premier paquet #1 correspond à l'ensemble des données emmagasinné dans le média de la piste #2 et délimité par les mêmes points de synchronisation de début PS0 et de fin PS1. Il en est de même pour le sous-groupe de données 85 compris entre les deux points de synchronisation ci-dessus et relatif au média de la piste #3. Suivant cette logique, on comprend que le principe de construction des paquets est d'assembler dans un même paquet de données des sous-groupes de données provenant des différentes pistes de média et étant délimités par des points de synchronisation identiques. Ces points de synchronisation sont fixés par un monteur au niveau du serveur relais 4. Le monteur décompose le signal multimedia provenant du dispositif 42, via des moyens 10 de décomposition connus en soi, en décomposant les différents média du signal selon les points de synchronisation PS0 à PS4 (dans le cas de la figure 3). Comme déjà mentionné, ces point sont déterminés de manière à correspondre parfaitement lors de leur exécution.

Comme représenté sur la figure 4, les sous-groupes de tous les média (ou pistes) qui correspondent de par des points de synchronisation communs sont alors rassemblés dans un même paquet au moyen d'un combineur 11, lequel paquet est formaté selon la syntaxe citée, par exemple, puis intégré dans le fichier multimédia de façon cohérente temporellement.

On remarquera qu'il a été envisagé que le fichier multimedia comprenne plusieurs paquets. Il peut être également envisagé qu'il en comporte qu'un seul, les autres paquets étant acheminés dans les fichiers multimedia suivants.

Pour que le terminal puisse reconnaître les points de synchronisation, le monteur inscrit par des moyens connus en soi les points de synchronisation sur une page de script 12 décrivant les différents points de synchronisation dans le fichier multimedia. Ce script est joint au fichier multimedia ou intégré à celui-ci.

Bien entendu, l'invention n'est pas limitée aux modes de réalisation décrits.

Ainsi, elle peut être appliquée à tout type de messagerie et sur tout type de réseau (WEB, WAP, ...). Ainsi, elle est destinée aussi bien à des terminaux mobiles (radiotéléphones, assistants numériques personnels dotés de moyens de télécommunications sans fil ...) mais aussi à des ordinateurs personnels reliés au réseau internet.

Son intérêt réside aussi dans son caractère pleinement orienté objet.

## Revendications

1. Dispositif de génération d'un fichier multimédia (5) à destination d'un terminal de télécommunications (2) à partir de groupes de données (piste #1, piste #2) correspondant respectivement à un type de contenu du fichier multimédia, **caractérisé en ce que** le dispositif comprend :
- des moyens de décomposition de chacun desdits groupes de données selon respectivement une pluralité de sous-groupes de données en fonction de points de synchronisation (PS0, ...PS4) associés respectifs de début et de fin d'exécution sur des moyens d'interfaçage homme-machine du terminal, des sous-groupes associés à des points de synchronisation respectifs de début et de fin identiques étant destinés à être exécutés simultanément sur les moyens d'interfaçage homme-machine,
- des moyens d'assemblage (11) du fichier multimédia sous forme d'une pluralité de paquets (8, 9, ...) comprenant une pluralité de sous-groupes de données (83, 84, ..., 93, 94, ...) associés à des points de synchronisation respectives de début et de fin identiques.

2. Dispositif selon la revendication 1, **caractérisé en ce qu'**il comprend des moyens (12) de description destinés à décrire les points de synchronisation dans le fichier multimédia.

3. Dispositif selon la revendication 1 ou 2, **caractérisé en ce qu** lesdits groupes de données comprennent des données textuelles, des images animées ou non, des sons compressés ou non.

4. Serveur relais apte à recevoir des groupes de données (piste #1, piste #2, ...) correspondant respectivement à un type de contenu multimédia, destiné à émettre un fichier multimédia regroupant lesdits groupes de données, **caractérisé en ce qu'**il comporte un dispositif de génération de fichier multimédia selon l'une des revendications 1 à 3.

5. Fichier multimédia destiné à être transmis à un terminal de télécommunications (2), ledit fichier comprenant une pluralité de paquets (8, 9, ...) de données, **caractérisé en ce que**
- chacun desdits paquets de données correspond à la concaténation de sous-groupes de données (83, 84, ..., 93, 94, ...) respectivement relatifs à un type de contenu de fichier multimedia et associés à des points de synchronisation (PS0, ...PS4) respectifs de début et de fin identiques étant destinés à être exécutés simultanément sur des moyens d'interfaçage homme-machine du terminal identiques.

6. Fichier multimédia selon la revendication 5, **caractérisé en ce qu'**il comprend des moyens de description (12) destinés à décrire les points de synchronisation associés au fichier multimédia.

7. Fichier multimédia selon la revendication 5 ou 6, **caractérisé en ce qu** le terminal de télécommunications auquel ledit fichier est destiné à être transmis est un terminal mobile du type comprenant un radiotéléphone ou/et un assistant numérique personnel doté de moyens de télécommunications sans fil, ou un terminal fixe du type d'un ordinateur personnel relié au réseau internet.

## Claims

1. A device for generating a multimedia file (5) for sending to a telecommunications terminal (2), the file being made up of data groups (track #1, track #2) corresponding to respective types of content in the multimedia file, the device being **characterized in that** it comprises:
means for splitting up each of said data groups into respective pluralities of data subgroups as a function of synchronization points (PS0, ..., PS4) associated respectively with the beginning and the end of execution on man-machine interface means of the terminal, the subgroups associated with identical respective beginning and end synchronization points being for simultaneous execution on the man-machine interface means; and
assembly means (11) for assembling the multimedia file in the form of a plurality of packets (8, 9,' ...) each comprising a plurality of data subgroups (83, 84, ..., 93, 94, ...) associated with respective identical beginning and end synchronization points.

2. A device according to claim 1, **characterized in that** it has description means (12) for describing the synchronization points in the multimedia file.

3. A device according to claim 1 or claim 2, **characterized in that** said data groups comprise text data, optionally animated image data, optionally compressed sound.

4. A relay server suitable for receiving data groups (track #1, track #2, ...) corresponding to respective types of multimedia content, for delivering a multimedia file grouping together said data groups, the server being **characterized in that** it includes a multimedia file generator device according to any one of claims 1 to 3.

5. A multimedia file for sending to a telecommunications terminal (2), said file comprising a plurality of data packets (8, 9, ...) and being **characterized in that**:
each of said data packets corresponds to a concatenation of data subgroups (83, 84,..., 93, 94,...) relating to respective types of multimedia file content and associated with respective identical beginning and end synchronization points (PS0, ..., PS4) for simultaneous execution on identical man-machine interface means of the terminal.

6. A multimedia file according to claim 5, **characterized in that** it comprises description means (12) for describing the synchronization points associated with the multimedia file.

7. A multimedia file according to claim 5 or claim 6, **characterized in that** the telecommunications terminal to which said file is to be sent is a mobile terminal of the type comprising a radiotelephone and/or a personal digital assistant provided with wireless telecommunications means, or a fixed terminal of the personal computer type connected to the Internet.

## Patentansprüche

1. Vorrichtung zur Generierung einer Multimediadatei (5) für ein Telekommunikationsendgerät (2) aus Datengruppen (Spur 1, Spur 2), die jeweils einem Inhaltstyp der Multimediadatei entsprechen, **dadurch gekennzeichnet, dass** die Vorrichtung umfasst:
- Mittel zur Zerlegung jeder dieser Datengruppen, jeweils entsprechend einer Vielzahl von Datenuntergruppen in Abhängigkeit von dazugehörigen Synchronisationspunkten (PS0, ...PS4) am Anfang beziehungsweise am Ende der Ausführung auf Mitteln einer Mensch-Maschine-Schnittstelle des Endgerätes, wobei Untergruppen, die identischen Anfangs- beziehungsweise Ende-Synchronisationspunkten zugeordnet sind, dafür bestimmt sind, gleichzeitig auf den Mittel einer Mensch-Maschine-Schnittstelle ausgeführt zu werden;
- Zusammenstellungsmittel (11) der Multimediadatei in Form einer Vielzahl von Paketen (8, 9, ...), die eine Vielzahl von Datenuntergruppen (83, 84, .., 93, 94, ...) umfassen, welche identischen Anfangs- beziehungsweise Ende-Synchronisationspunkten zugeordnet sind.

2. Vorrichtung nach Anspruch 1, **dadurch gekennzeichnet, dass** sie Beschreibungsmittel (12) zur Beschreibung der Synchronisationspunkte in der Multimediadatei umfasst,

3. Vorrichtung nach Anspruch 1 oder 2, **dadurch gekennzeichnet, dass** die Datengruppen Textdaten, animierte oder nicht animierte Bilder und komprimierte oder nicht komprimierte Töne umfassen.

4. Verbindungsserver, geeignet zum Empfangen der Datengruppen (Spur 1, Spur 2, ...), die jeweils einem Typ von Multlmediainhalten entsprechen, dazu bestimmt, eine Multimediadatei zu senden, die diese Datengruppen zusammenfasst, **dadurch gekennzeichnet, dass** er eine Vorrichtung zur Generierung einer Multimediadatei nach einem der Ansprüche 1 bis 3 umfasst.

5. Multimediadatei, dazu bestimmt, an ein Telekommunikationsendgerät (2) übertragen zu werden, wobei die Datei eine Vielzahl von Datenpaketen (8, 9, ...) umfasst, **dadurch gekennzeichnet, dass**
- jedes der Datenpakete der Verkettung von Datenuntergruppen (83, 84, ..., 93, 94, ...) entspricht, die sich jeweils auf einen Inhaltstyp der Multimediadatei beziehen und identischen Anfangs- beziehungsweise Ende-Synchronisationspunkten zugeordnet sind, die gleichzeitig ausgeführt werden sollen, und zwar auf identischen Mitteln einer Mensch-Maschine-Schnittstelle des Endgerätes.

6. Multimediadatei nach Anspruch 5, **dadurch gekennzeichnet, dass** sie Beschreibungsmittel (12) zur Beschreibung der Synchronisationspunkte umfasst, die der Muttimediadatei zugeordnet sind.

7. Multimediadatei nach Anspruch 5 oder 6, **dadurch gekennzeichnet, dass** das Telekommunikationsendgerät, an das die Datei übertragen werden soll, ein mobiles Endgerät vom Typ eines Funktelefons und/oder eines Personal Digital Assistant ist, das bzw. der mit drahtlosen Telekommunikationsmitteln ausgestattet ist, oder ein Festnetzendgerät vom Typ eines mit dem Internet verbundenen Personal Computers.
